(19) Europäisches Patentamt
European Patent Office
Office européen des brevets

(11) Publication number: 0 422 733 A1

# (12) EUROPEAN PATENT APPLICATION

(21) Application number: 90202669.9

(22) Date of filing: 08.10.90

(51) Int. Cl.5: C08K 5/3492, C08L 33/04, C08L 33/08

(30) Priority: 12.10.89 IT 2200989

(43) Date of publication of application: 17.04.91 Bulletin 91/16

(84) Designated Contracting States: AT BE CH DE DK ES FR GB LI NL SE

(71) Applicant: ENICHEM ELASTOMERI S.p.A.
Via Ruggero Settimo 55
I-90139 Palermo(IT)

(72) Inventor: Spelta, Angelo Lucio
Via della Molazza 28/B
I-20071 Casalpusterlengo-Milan(IT)
Inventor: Gargani, Luciano
Via Jannozzi 44
I-20097 San Donato Milanese-Milan(IT)
Inventor: Cucinella, Salvatore
Via Kennedy 12
I-20097 San Donato Milanese-Milan(IT)

(74) Representative: Roggero, Sergio et al
Ing. Barzanò & Zanardo Milano S.p.A. Via Borgonuovo 10
I-20121 Milano(IT)

## (54) Acrylic elastomer-based polymer compositions with high flame resistance.

(57) Acrylic elastomer-based polymer compositions characterised by flame retardation and low fume emission are obtained by adding organic or inorganic melamine salts such as melamine cyanurate and melamine phosphate, used singularly or mixed together.

These formulations are compatible with the other additives usually used in acrylic rubbers.

The flame retardant additives used are effective at low levels of addition, so that the resultant flame resistant elastomer formulations, which are of low fume emission, maintain the main basic elastomer properties, which represent an optimum compromise between elastic properties, mechanical properties and oil resistance under severe service conditions.

EP 0 422 733 A1

# ACRYLIC ELASTOMER-BASED POLYMER COMPOSITIONS WITH HIGH FLAME RESISTANCE

This invention relates to flame resistant elastomer compositions which ensure low fume emission in the case of thermal degradation and/or combustion.

These compositions are based on acrylic elastomers and derive from the addition of organic or inorganic melamine salts.

Elastomer compositions containing various flame retardant (FR) agents are known.

The compositions most widely used commercially are based on hydrated alumina, preferably bromine or chlorine based organic halogenated derivatives in combination with antimony oxide, phosphorus derivatives and boron derivatives.

Generally, to obtain an acceptable flame retardation such high additive levels are required as to compromise the special properties of the basic elastomer.

In some cases it is the thermal decomposition of the FR agent simultaneously with that of the polymer material, and in any event necessary to obtain the actual FR effect, which is responsible for the emission of dense and/or corrosive fumes, which can be detrimental to human life and/or property.

In this respect, dense and/or corrosive fumes hinder the identification of escape routes and cause asphyxia before the fire itself has propagated. Even if the fire can be controlled and extinguished in its initial stages, the emission of corrosive vapours can result in very serious and irreparable damage to high-cost and/or strategically important structures such as data processing equipment, electronic circuits, communication equipment, telephone connections etc. There is therefore a continually increasing requirement for compositions which combine high FR efficiency with low or zero capacity for emitting dense/corrosive fumes.

These safety factors are essential in the case of certain particular uses of polymer materials.

They are essential for example in the case of elastomer materials used in electric cables installed in closed environments and frequently serving costly equipment of strategic importance.

In the specific case of acrylic elastomers increasing use is made of the FR action of hydroxides such as $Al(OH)_3$ or $Mg(OH)_2$. US patent 4,373,039 describes polymer compositions based on acrylic rubbers which contain these hydroxides.

However, as stated therein, acceptable properties are obtained for the polymer material only by using considerable quantities of these hydroxides, which are added up to 200% of the polymer itself, so considerably prejudicing the other behavioural properties of the polymer. Other products which oan act with a retardant effect on flame propagation are carbonates of alkaline earth metals. They are however generally used not only in high quantity but also in combination with other halogenated FR agents, and therefore do not solve the aforesaid problems.

According to one aspect of the present invention it has now been found that adding relatively low quantities of certain organic derivatives to acrylic rubbers, as described hereinafter, gives these materials excellent FR properties without compromising their elastic, mechanical or oil-resistant properties under severe service conditions. Said organic derivatives comprise organic and inorganic melamine salts such as melamine cyanurate and melamine phosphate. The present invention therefore provides acrylic rubber-based polymer compositions containing said nitrogenated additives.

These compositions have the characteristic of not containing halogens and therefore avoiding the serious problems connected with the use of halogenated FR agents which can result in considerable development of acid and corrosive fumes.

Compared with other known acrylic rubber-based FR formulations, which are also sometimes defined as formulations of low fume development on combustion and normally obtained by adding metal hydroxides such as the aforementioned, the formulations according to the present invention are characterised by having the same FR and low fume emission characteristics but for a much smaller addition of FR agents. This ensures that all the other physical and engineering properties required of acrylic rubbers and the deriving articles are maintained.

For example the ultimate elongation of the formulations claimed by the present invention is generally higher than that of formulations obtainable with hydrated alumina for equal levels of resultant flame retardation.

The properties of the starting elastomer, ie high resistance to oil and to high temperature, are maintained.

The present invention therefore provides a polymer composition characterised by flame resistance and low fume emission, comprising:

A) an acrylic elastomer possibly in mixture with other resins;

B) melamine cyanurate and/or melamine phosphate;

C) possibly, as additive and reinforcing agent, at least one polymer other than A);

D) possible agents, additives, lubricants, cross-linking accelerators and/or inert fillers.

The basic acrylic elastomers for the formulations of the present invention are copolymers deriving from the copolymerization of two or more monomers chosen from the following:

a) Alkylacrylates of formula:

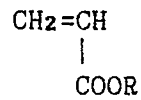

where R is a $C_1$-$C_{12}$ linear or branched alkyl group.

Examples of such monomers are ethylacrylate, propylacrylate, butylacrylate and hexylacrylate.

b) Alkoxyalkylacrylates or thioalkoxyalkylacrylates of formula:

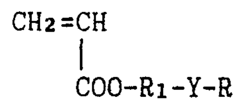

where $R_1$ and R are two alkyl groups in which R has the same meaning as heretofore and $R_1$ is a $C_1$-$C_6$ branched or non-branched di-substituted radical, and Y is an oxygen or sulphur atom. Significant examples of these monomers are methoxyethyl, methoxypropyl and ethoxyethylacrylate.

c) Olefinic monomers such as ethylene, propylene, 1-butene, 1-hexene and 1-octene.

d) Monomers which can be copolymerized with those previously mentioned and containing functional groups such as the -OH, Cl, Br, COOH or glycidyl group, or groups containing double bonds.

These monomers generally satisfy the structures:

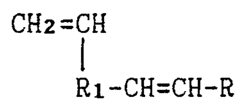

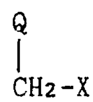

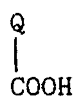

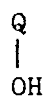

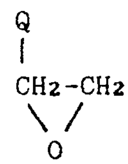

in which R and $R_1$ have the aforesaid meaning; Q is an organic structure containing an unsaturation and able to be copolymerized with the aforesaid acrylic monomers; X is a halogen atom.

The presence in the acrylic elastomer of monomer units containing functional groups from the monomers of group d) makes it possible for cross-linking to produce a vulcanized elastomer with high elastic characteristics.

Generally the functional groups are in the form of substituents of the alkyl radical R in the acrylic monomers of the initially stated type. This is the case in glycidylacrylate

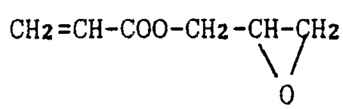

hydroxyethylacrylate, hydroxypropylacrylate etc. Otherwise they are bonded to different monomer structures such as allylglycidyl ether, 2-chloroethyl-vinylether, or 2-bromoethyl-vinylether.

The required quantity of such monomer units containing functional groups to ensure optimum cross-linking density is between 0.1 and 10% and preferably between 0.5 and 5% by weight of the total polymer.

The basic acrylic elastomers can also consist of homopolymers of monomers chosen from the monomers of group a) or group b)

Preferred elastomers for the purposes of the present invention are polymers resulting from the copolymerization of one or more monomers containing the aforesaid functional groups in a quantity such as

to introduce into the final polymer a number of functional groups lying within said percentages, with at least one monomer chosen from the alkylacrylate monomers.

The acrylic structure can also be formed by copolymerization of an acrylate pertaining to said group a) with one or more alkoxyalkylacrylates from those pertaining to group b) and monomers containing functional groups, in the aforesaid quantity.

More generally, at least one acrylic monomer pertaining to group a) is copolymerized with one or more monomers containing functional groups d) in the presence or absence of one or more alkoxyalkylacrylates b) and/or one or more olefins c), the weight ratio of the functional monomer quantity to the remaining monomer fraction being such that in the formed polymer the monomer units of the former do not constitute more than 10% and preferably not more than 5% by weight of the entire polymer.

Said acrylic polymer, obtained by the usual radical copolymerization methods well known to the expert of the art, either alone or in mixture with other resins such as epoxy resins, can have added to it a small quantity of a different polymer such as a polyolefin or a polyfluoroolefin or another fluorinated polymer.

The melamine salts, such as melamine phosphate and melamine cyanurate are generally mixed together with the acrylic elastomer or with its mixture with other resins, together with possible other additives, inert fillers and stabilizers, in desired proportions.

The additives important for the purposes of the present invention include vulcanization accelerators, consisting of polyamines, diamines, tertiary amines, thioureas, quaternary ammonium salts, peroxides, sulphur, metal oxides, alkaline salts of fatty acids, phosphonium salts etc.

To facilitate the mixing process, lubricants can be used up to 15 parts by weight per 100 parts of elastomer, even though their use is not strictly necessary.

The various components can be mixed by the methods well known to the expert of the art. Banbury mixers. rotary mills, roller mixers, extruders etc. are generally used.

The polymer compositions of the present invention find their main use in the manufacture of electric cables. They are also advantageously used in different items for use in closed and/or domestic environments, such as components of public and private room furnishings, household electrical appliances etc.

The following examples are provided to better illustrate the present invention but without in any way limiting its scope.

EXAMPLE 1

Mixture components

The following were used:

- a commercial acrylic elastomer known as Europrene AR 153 EP, which is an ethylacrylate elastomer containing carboxyl and epoxide groups;
- melamine cyanurate;
- carbon black, type N550 in accordance with ASTM D 1765;
- stearic acid;
- Arax B18 master batch containing 50% of octadecyltrimethylammonium bromide as vulcanization accelerator.

Mixture compositions

These are given in Table 1.

Mixture preparation

The ingredients were mixed using a laboratory roller mixer at a temperature of between 30 °C and 40 °C.

The accelerator was added later (after about 1 hour), after incorporating the fillers.

The mixtures obtained in this manner were vulcanized in a steam press at a temperature of 170 °C for a time of 30 minutes, to form plates suitable for determining the tensile properties in accordance with ASTM D 412 and the oxygen index in accordance with ASTM D 2863.

Results

The results of the evaluation of mixtures with and without added melamine cyanurate are given in Table 1. These show an increase in the oxygen index as the additive content increases.

Correspondingly, an increase is observed in the hardness and ultimate elongation, whereas the decrease in the ultimate tensile strength is contained within acceptable limits.

EXAMPLE 2

Mixture Components

The following were used:
- a commercial acrylic elastomer known as Europrene AR 153 EP, which is an ethylacrylate elastomer containing carboxyl and epoxide groups;
- melamine phosphate;
- carbon black, type N550 in accordance with ASTM D 1765;
- stearic acid;
- Arax B18 master batch containing 50% of octadecyltrimethylammonium bromide as vulcanization accelerator.

Mixture compositions

These are given in Table 2.

Mixture preparation

The ingredients were mixed using a laboratory roller mixer at a temperature of between 30° C and 40° C. The accelerator was added later (after about 1 hour), after incorporating the fillers.

The mixtures obtained in this manner were vulcanized in a steam press at a temperature of 170° C for a time of 30 minutes, to form plates suitable for determining the tensile properties in accordance with ASTM D 412 and the oxygen index in accordance with ASTM D 2863.

Results

The results of the evaluation of mixtures with and without added melamine phosphate are given in Table 2. These show an increase in the oxygen index as the additive content increases.

Correspondingly, an increase is observed in the hardness and ultimate elongation, whereas the decrease in the ultimate tensile strength is contained within acceptable limits.

EXAMPLE 3

Mixture components

The following were used:
- a commercial acrylic elastomer known as Europrene AR 153 EP, which is an ethylacrylate elastomer containing carboxyl and epoxide groups;
- melamine cyanurate;
- melamine phosphate;
- carbon black, type N550 in accordance with ASTM D 1765;
- stearic acid;
- Arax B18 master batch containing 50% of octadecyltrimethylammonium bromide as vulcanization

accelerator.

Mixture compositions

These are given in Table 3.

Mixture preparation

The ingredients were mixed using a laboratory roller mixer at a temperature of between 30° C and 40° C. The accelerator was added later (after about 1 hour), after incorporating the fillers.

The mixtures obtained in this manner were vulcanized in a steam press at a temperature of 170° C for a time of 30 minutes, to form plates suitable for determining the tensile properties in accordance with ASTM D 412 and the oxygen index in accordance with ASTM D 2863.

Results

The results of the evaluation of mixtures with and without added melamine cyanurate melamine phosphate are given in Table 3. These show an increase in the oxygen index as the additive content increases.

Correspondingly, an increase is observed in the hardness and ultimate elongation, whereas the decrease in the ultimate tensile strength is contained within acceptable limits.

TABLE 1

| ELASTOMER AR 153 EP | | | | |
|---|---|---|---|---|
| POLYMER | 100 | 100 | 100 | 100 |
| STEARIC ACID | 1 | 1 | 1 | 1 |
| CARBON BLACK N550 | 50 | 50 | 50 | 50 |
| MELAMINE CYANURATE | - | 10 | 20 | 40 |
| ARAX B18 MB 50% [OTAB(*)] | 1.5 | 1.5 | 1.5 | 1.5 |
| MOONEY VISC CPD 1+4(100° C) | 50 | 54 | 59 | 75 |
| RHEOMETRICS AT 170° C, 24 min, 50%, ±1° | | | | |
| LOW M lb.inch | 5.2 | 5.6 | 6.2 | 8.3 |
| HIGH M lb.inch (24 min) | 24 | 26.8 | 27.9 | 29.8 |
| SCORCH TIME min | 1 m 12s | 1m 16s | 1m 18s | 1m 11s |
| VULCANIZATION 30 min at 170° C | | | | |
| MOD100 MPa | 4.6 | 4.6 | 5.2 | 5.6 |
| UTS MPa | 12.9 | 12.1 | 11.7 | 10.4 |
| UL % | 230 | 250 | 250 | 270 |
| HARDN. Shore A pti | 62 | 65 | 70 | 79 |
| L.O.I. | 20 | 23 | 24 | 25 |

(*) Octadecyltrimethylammoniumbromide

TABLE 2

| ELASTOMER AR 153 EP | | | |
|---|---|---|---|
| POLYMER<br>STEARIC ACID<br>CARBON BLACK N550<br>MELAMINE PHOSPHATE<br>ARAX B18 MB 50% [OTAB(*)] | 100<br>1<br>50<br>-<br>1.5 | 100<br>1<br>50<br>10<br>1.5 | 100<br>1<br>50<br>20<br>1.5 |
| MOONEY VISC CPD 1+4(100° C) | 50 | 54 | 55 |
| RHEOMETRICS AT 170° C, 24 min, 50%, ±1° | | | |
| LOW M lb.inch<br>HIGH M lb.inch (24 min)<br>SCORCH TIME min | 5.2<br>24<br>1 m 12s | 5.2<br>22<br>1m 28s | 5.3<br>20.3<br>1m 56s |
| VULCANIZATION 30 min at 170° C | | | |
| MOD100 MPa<br>UTS MPa<br>UL %<br>HARDN. Shore A pti<br>L.O.I. | 4.6<br>12.9<br>230<br>62<br>20 | 3.1<br>11.3<br>315<br>60<br>25 | 2.8<br>10.2<br>360<br>61<br>27 |

(*) Octadecyltrimethylammoniumbromide

TABLE 3

| ELASTOMER AR 153 EP | | | |
|---|---|---|---|
| POLYMER<br>STEARIC ACID<br>CARBON BLACK N550<br>MELAMINE CYANURATE<br>MELAMINE PHOSPHATE<br>ARAX B18 MB 50% [OTAB(*)] | 100<br>1<br>50<br>-<br>-<br>1.5 | 100<br>1<br>50<br>7.5<br>7.5<br>1.5 | 100<br>1<br>50<br>15<br>15<br>1.5 |
| MOONEY VISC CPD 1+4(100° C) | 50 | 51 | 60 |
| RHEOMETRICS AT 170° C, 24 min, 50%, ±1° | | | |
| LOW M lb.inch<br>HIGH M lb.inch (24 min)<br>SCORCH TIME min | 5.2<br>24<br>1 m 12s | 5.3<br>22.6<br>1m 37s | 5.6<br>20<br>2m 9s |
| VULCANIZATION 30 min at 170° C | | | |
| MOD100 MPa<br>UTS MPa<br>UL %<br>HARDN. Shore A pti<br>L.O.I. | 4.6<br>12.9<br>230<br>62<br>20 | 3<br>11.5<br>355<br>64<br>25 | 2.9<br>9.3<br>375<br>69<br>27 |

(*) Octadecyltrimethylammoniumbromide

**Claims**

1. A polymer composition characterised by flame resistance and low fume emission, comprising:

A) an acrylic elastomer possibly in mixture with other resins;

B) melamine cyanurate and/or melamine phosphate;

C) possibly, as additive and reinforcing agent, at least one polymer other than A);

D) possible agents, additives, lubricants, cross-linking accelerators and/or inert fillers.

2. A polymer composition as claimed in the preceding claim, characterised in that the melamine cyanurate and/or melamine phosphate constitute between 0.1 and 70% by weight of the entire composition.

3. A polymer composition as claimed in the preceding claims, characterised in that the elastomer matrix is a copolymer deriving from the copolymerization of at least two of the following monomers:

a) an alkylacrylate of formula:

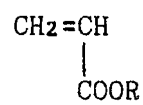

where R is a $C_1$-$C_{12}$ linear or branched alkyl radical;

b) an acrylate of formula:

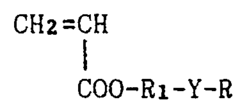

where R has the aforesaid meaning, $R_1$ is a $C_1$-$C_6$ branched or non-branched di-substituted alkyl radical and Y is oxygen or sulphur;

c) an olefin;

d) a functional monomer which can be copolymerized with the aforedefined monomers, and satisfies the structures:

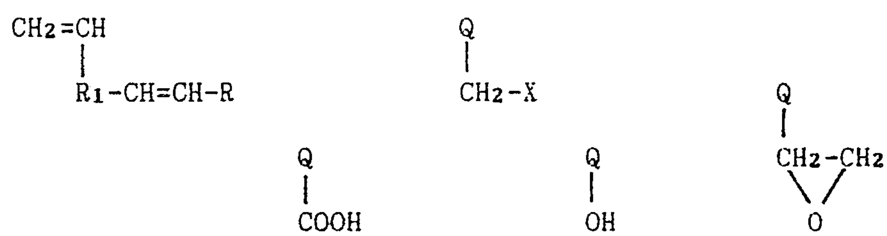

where R and $R_1$ have the aforesaid meaning; Q is an organic structure containing an unsaturation and able to be copolymerized with the aforesaid acrylic monomers; X is a halogen atom.

4. A polymer composition as claimed in claim 3, wherein the elastomer matrix A consists of at least 90% by weight of the alkylacrylate a), the remainder to 100% consisting of at least one of the functional monomers defined in 3d).

5. A polymer composition as claimed in claim 3, wherein at least 90% by weight consists of acrylic monomers of the formula defined in a) and in b) in any mutual ratio, the remainder to 100% consisting of at least one of the functional monomers defined in d).

6. A composite material as claimed in claim 3, wherein at least 90% by weight consists of acrylic monomers of the formula defined in a) and in c) in any mutual ratio, the remainder to 100% consisting of at least one of the functional monomers defined in d).

7. A composite material as claimed in claim 3, wherein at least 90% by weight consists of acrylic monomers of the formula defined in a), b) and c) in any mutual ratio, the remainder to 100% consisting of at least one of the functional monomers defined in d).

8. A polymer composition as claimed in the preceding claims, characterised in that the polymer C) is a polyethylene, a polypropylene and/or a fluorinated polymer.

9. A polymer composition as claimed in the preceding claims, characterised in that the additives acting as cross-linking agents are chosen from polyamines, diamines, tertiary amines, thioureas, quaternary ammonium salts, peroxides, sulphur, metal oxides, alkaline salts of fatty acids, polythioltriazines and phosphonium

salts.

10. A method for cross-linking the polymer composition claimed in the preceding claims, consisting of subjecting the material to vulcanization.

11. A polymer composition as claimed in claim 1, characterised in that the elastomer material is a homopolymer of a monomer of group a) or of group b).

European Patent Office

# EUROPEAN SEARCH REPORT

Application Number

EP 90 20 2669

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 8, no. 218 (C-245)[1655], 4th October 1984; & JP-A-59 102 966 (NIPPON CARBIDE KOGYO K.K.) 14-06-1984<br>* Abstract * | 1,2 | C 08 K 5/3492<br>C 08 L 33/04<br>C 08 L 33/08 |
| A | EP-A-0 149 171 (EC ERDOELCHEMIE GmbH)<br>* Page 4, lines 3-11; page 6, line 5 - page 7, line 25; claim 1 * | 1-3 | |
| A | EP-A-0 017 925 (TORAY INDUSTRIES, INC.)<br>* Page 2, lines 18-21; claims 1,3-6 * | 1-3 | |
| | | | TECHNICAL FIELDS SEARCHED (Int. Cl.5) |
| | | | C 08 K<br>C 08 L |

The present search report has been drawn up for all claims

| Place of search | Date of completion of the search | Examiner |
|---|---|---|
| THE HAGUE | 14-12-1990 | SIEMENS T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document